# EUROPÄISCHE PATENTSCHRIFT

(11) **EP 1 510 764 B1**
(45) Veröffentlichungstag und Bekanntmachung des Hinweises auf die Patenterteilung: **16.03.2011**
(21) Anmeldenummer: 03405618.4
(22) Anmeldetag: 27.08.2003
(51) Int. Cl.: F24F 12/00, F28F 27/02, F28D 7/16

(54) **Lüftungseinrichtung und Verfahren zu ihrem Betrieb**
Ventilation device and operating method thereof
Dispositif de ventilation et procédé pour sa mise en oeuvre

(43) Veröffentlichungstag der Anmeldung: 02.03.2005
(73) Patentinhaber: FENSTERFABRIK ALBISRIEDEN AG, CH-8047 Zürich (CH)
(72) Erfinder: Bühlmann, Bernhard, 8001 Zürich (CH)
(74) Vertreter: Wagner, Wolfgang Heribert

(56) Entgegenhaltungen:
- DE-A- 2 842 974
- DE-A- 3 426 778
- DE-A1- 3 643 303
- DE-C- 853 202
- GB-A- 678 342
- JP-A- 62 206 381
- US-A- 3 735 811

## Beschreibung

### Technisches Gebiet

Die Erfindung betrifft eine Lüftungseinrichtung gemäss dem Oberbegriff des Anspruchs 1. Derartige Lüftungseinrichtungen gestatten es, Abluft aus einem geschlossenen Raum durch von aussen zugeführte Zuluft, die dabei mit der Abluft Wärme austauscht, zu ersetzen. Ausserdem betrifft sie ein Verfahren zum Betrieb einer erfindungsgemässen Lüftungseinrichtung.

### Stand der Technik

Es sind schon viele Lüftungseinrichtungen beschrieben worden, welche einen Gegenstrom-Wärmetauscher umfassen. So ist aus der EP 1 308 678 A1 eine z.B. in ein Fenster einbaubare gattungsgemässe Lüftungseinrichtung bekannt, bei welcher in einem quaderförmigen Gehäuse ein Doppelkanal, der aus einem Zuluftkanal und einem mit demselben thermisch eng gekoppelten Abluftkanal besteht, serpentinenförmig geführt ist. Die Einrichtung ist sehr platzsparend und kann leicht auch nachträglich eingebaut werden. Durch die scharfen Umlenkungen ist die Strömung im wesentlichen turbulent und der Wirkungsgrad verhältnismässig hoch. Die Länge des Doppelkanals kann ausserdem leicht an die Anforderungen angepasst werden, die hinsichtlich des Wirkungsgrades an die Lüftungseinrichtung gestellt werden.

Aus der DE 33 47 028 A1 ist eine Lüftungseinrichtung bekannt, welche in einen Fensterrahmen integriert ist. Der Zuluftkanal und der Abluftkanal sind jeweils fast vollständig um das Fenster herumgeführt, über einen Teil des Umfangs als Doppelkanal, der an zwei Ecken des Fensterrahmens jeweils um 90° umgelenkt wird. Diese Anordnung benötigt viel Platz und ist praktisch nur in der beschriebenen Form, also mit Integration in einen Fensterrahmen o.dgl. einsetzbar. Die Länge des Doppelkanals und damit der Grad des erreichbaren Wärmeaustauschs ist wesentlich durch die Abmessungen des Fensterrahmens bestimmt. Die Strömung dürfte verhältnismässig wenig turbulent sein, so dass die Wärmeübertragung, jedenfalls wenn nicht zusätzliche Massnahmen getroffen, z.B. Wärmetauscherrippen vorgesehen werden, wegen der Bildung von Strömungsschichten eher gering bleibt.

Bei einer ähnlichen Lüftungseinrichtung gemäss DE 32 30 279 A1 erstreckt sich der Doppelkanal nur über eine Seite des Fensterrahmens. Hier dürfte die Wärmeübertragung trotz Wärmetauscherrippen oder konzentrischer Führung des Zuluftkanals und des Abluftkanals verhältsmässig geringfügig bleiben.

In DE 34 26 778 A1 ist eine Lüftungseinrichtung beschrieben, die ebenfalls z.B. in einen Holm eines Fensterrahmens eingebaut werden kann. Hier sind Zuluftkanal und Abluftkanal in durch Lamellen getrennte gerade Teilkanäle aufgeteilt, derart, dass sich Zuluft- und Abluftteilkanäle abwechseln. Daher ist der Aufbau der Vorrichtung verhältnismässig komplex. Je zahlreicher und schmäler die Teilkanäle im Sinne wirksamer Wärmeübertragung sind, desto höher ist der Strömungswiderstand.

Aus der WO 96/12 145 A1 ist eine grundsätzlich ähnliche Lüftungseinrichtung bekannt, bei welcher die Teilkanäle konzentrisch angeordnet und schraubenlinienförmig ausgebildet sind. Diese Lüftungseinrichtung dürfte die gleichen Nachteile haben wie die zuletzt genannte. Vor allem ist der Aufbau sehr komplex und die Herstellung dürfte entsprechend teuer sein.

### Darstellung der Erfindung

Der Erfindung liegt die Aufgabe zu Grunde, den Wirkungsgrad bekannter gattungsgemässer Lüftungseinrichtungen zu verbessern. Diese Aufgabe wird durch die Merkmale des Anspruchs 1 gelöst. Anspruch 18 beschreibt eine vorteilhafte Betriebsweise der erfindungsgemässen Lüftungseinrichtung.

Es hat sich gezeigt, dass durch die erfindungsgemässen Massnahmen der Wirkungsgrad deutlich gesteigert wird. Zugleich kann die erfindungsgemässe Lüftungseinrichtung kompakt aufgebaut sein und verhältnismässig geringen Strömungswiderstand aufweisen. Auch störende Lärmentwicklung kann sehr gering gehalten werden. Sie kann einfach aufgebaut und entsprechend kostengünstig herstellbar sein.

### Kurze Beschreibung der Zeichnungen

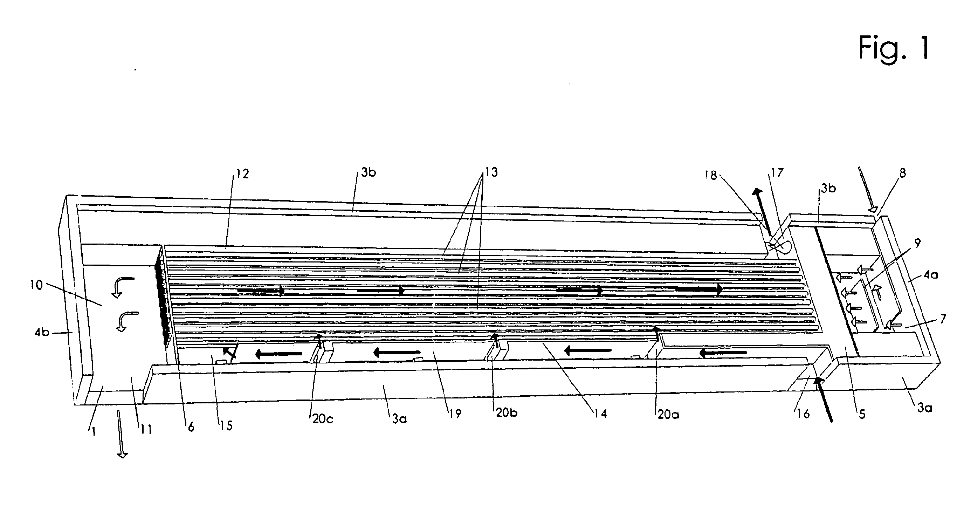

Im folgenden wird die Erfindung anhand von Figuren, welche lediglich ein Ausführungsbeispiel darstellen, näher erläutert. Es zeigen
- Fig. 1: eine perspektivische Ansicht des erfindungsgemässen Luftkühlelements schräg von oben bei abgenommenem Deckel,

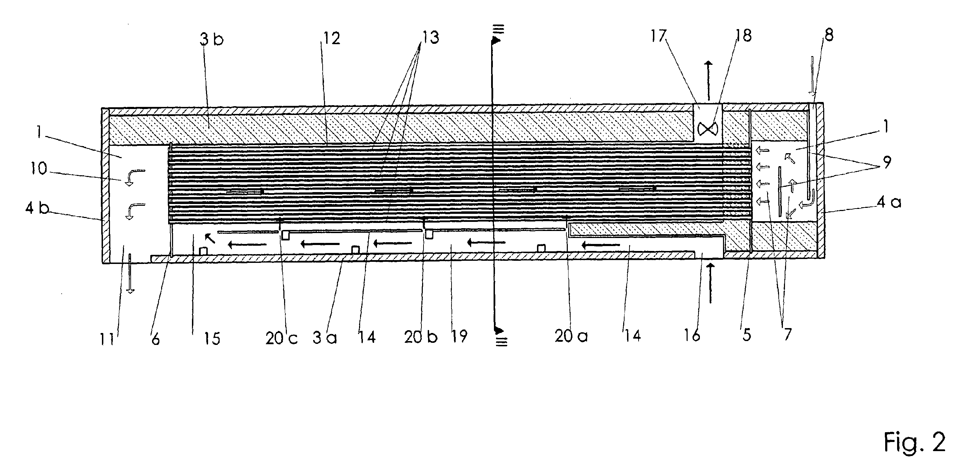

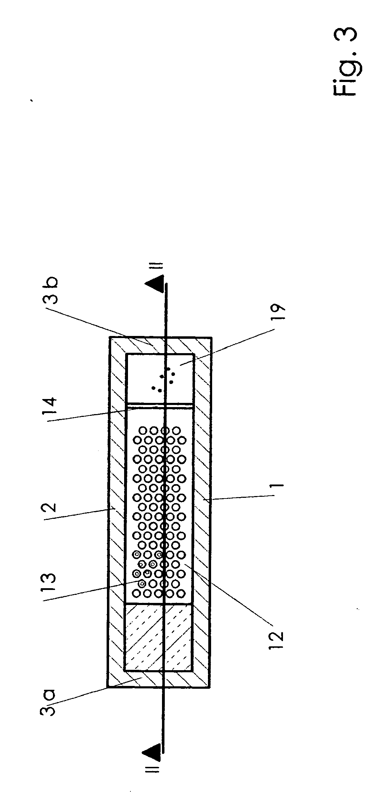

- Fig.2: einen waagrechten Längsschnitt durch das erfindungsgemässe Lüftungselement von Fig. 1, entsprechend II-II in Fig. 3 und
- Fig. 3: einen Querschnitt durch das erfindungsgemässe Lüftungselement längs III-III in Fig. 2.

### Wege zur Ausführung der Erfindung

Die Lüftungseinrichtung umfasst ein quaderförmiges Gehäuse mit einem Boden 1, einer Decke 2, Seitenwänden 3a,b und Stirnwänden 4a,b. Das Innere des Gehäuses ist durch zwei zu den Stirnwänden 4a,b parallele Zwischenwände 5, 6 weiter unterteilt. Zwischen der ersten Zwischenwand 5 und der Stirnwand 4a liegt eine kurze Einlasskammer 7, welche durch einen schmalen rechteckigen Zulufteinlass 8 mit dem Aussenraum verbunden ist. In der Einlasskammer 8 sind als turbulenzerzeugende Einbauten zur Stirnwand 4b parallele Umlenkwände 9 eingebaut, welche sich jeweils über einen Teil des Querschnitts erstrecken. Zwischen der zweiten Zwischenwand 6 und der der Stirnwand 4a gegenüberliegenden Stirnwand 4b liegt eine kurze Auslasskammer 10, welche durch einen rechteckigen Zuluftauslass 11 in der Seitenwand 3a mit dem zu lüftenden Raum verbunden ist.

Zwischen der ersten Zwischenwand 5 und der zweiten Zwischenwand 6 liegt ein längerer Hohlraum 12 rechteckigen Querschnitts. Seitlich voneinander beabstandete parallele Rohre 13, welche die Einlasskammer 8 mit der Auslasskammer 10 verbinden, sind durch die erste Zwischenwand 5 geführt, laufen, etwa gleichmässig über den Querschnitt verteilt, in Längsrichtung durch den Hohlraum 12 und durchdringen die zweite Zwischenwand 6. Auf der der Einlasskammer 8 abgewandten Seite weist die erste Zwischenwand 5 eine Isolationsschicht auf, so dass die Einlasskammer 8 vom Hohlraum 12 thermisch isoliert ist. Auch die Seitenwand 3b weist innen eine Isolationsschicht auf, welche die Einlasskammer 8, den Hohlraum 12 und die Auslasskammer 10 vom Aussenraum thermisch isoliert. Desgleichen weist in der Einlasskammer 8 die Seitenwand 3a innen eine Isolationsschicht auf, so dass die Einlasskammer 8 auch vom zu lüftenden Raum thermisch isoliert ist.

Parallel zur Seitenwand 3a ist eine Trennwand 14 angeordnet, welche sich von der ersten Zwischenwand 5 gegen die zweite Zwischenwand 6 erstreckt, derart, dass dort ein rechteckiger Durchgang 15 zum Hohlraum 12 freibleibt. Anschliessend an die erste Zwischenwand 5 ist die Seitenwand 3a von einem rechteckigen Ablufteinlass 16 durchbrochen. Die gegenüberliegende Seitenwand 3b ist, ebenfalls anschliessend an die erste Zwischenwand 5, von einem rechteckigen Abluftauslass 17 durchbrochen, in welchem ein Ventilator 18 angebracht ist.

Der Hohlraum 12 bildet mit den Rohren 13 einen Gegenstrom-Wärmetauscher mit einem Austauschabschnitt eines den Zulufteinlass 8 mit dem Zuluftauslass 11 verbindenenden Zuluftkanals, der durch den von den Rohren 13 umschlossenen Raum gebildet wird, während der verbleibende Teil des Hohlraums 12 einen Austauschabschnitt eines den Ablufteinlass 16 mit dem Abluftauslass 17 verbindenden Abluftkanals bildet. Die beiden Austauschabschnitte stehen durch die Rohre 13 hindurch in enger wärmeleitender Verbindung. Der zwischen der Seitenwand 3a und der Trennwand 14 liegende Bereich bildet einen den Ablufteinlass 16 mit dem Austauschabschnitt des Abluftkanals verbindenden Zuleitungsabschnitt 19 des letzteren, der, gegengleich zum Austauschabschnitt geführt, bis zum Durchgang 15 reicht.

Der Zuleitungsabschnitt 19 ist durch mehrere - im Beispiel drei - in Längsrichtung versetzte Kurzschlussverbindungen mit dem Hohlraum 12 verbunden. Sie werden von als schmale Schlitze 20a,b,c ausgebildeten Durchlässen in der Trennwand 14 gebildet. Durch Vorsprünge an der Trennwand 14 sind jeweils unmittelbar vor den Schlitzen 20b,c Verengungen angelegt, so dass sich der Zuleitungsabschnitt 19 unmittelbar an den Schlitzen 20b,c erweitert. Am Schlitz 20a erweitert sich der Zuleitungsabschnitt 19 ebenfalls, da die Trennwand 14 bis zu diesem Durchlass eine den Zuleitungsabschnitt 19 vom Hohlraum 11 und damit vom Austauschabschnitt des Abluftkanals thermisch isolierende Isolationsschicht umfasst und daher dicker ist. Zwischen den Schlitzen 20a,b,c und am Durchgang 15 weist der Zuleitungsabschnitt 19 weitere Verengungen auf, die durch Vorsprünge an der Seitenwand 3a gebildet werden.

Als Materialien für den Boden 1, den Deckel 2, die Seitenwände 3a,b, die Stirnwände 4a,b, die Zwischenwände 5, 6, die Umlenkwände 9 und die Trennwand 14 kommen Holz, Metall, Kunststoff, Pressspanplatten u.dgl. in Frage, wobei die Isolationsschichten aus Schaumstoff, z.B. Polyurethanschaumstoff bestehen können. Die Rohre 13 müssen aus gut wärmeleitendem Material bestehen. Hier bieten sich Metalle wie Aluminium, Stahl oder auch Kupfer an.

Der Abluftstrom ist in den Figuren durch einen einfachen Pfeil dargestellt, der Zuluftstrom durch einen Doppelpfeil. Durch den Ventilator 18 wird Abluft aus dem zu lüftenden Raum durch den Abluftkanal gesaugt und ausgestossen. Durch die Anordnung des Ventilators 18 im Bereich des Abluftauslasses 17 wird Lärmbelastung des Raumes weitgehend vermieden. Die Abluft tritt durch den Ablufteinlass 16 in die Lüftungseinrichtung ein und fliesst durch den Zuleitungsabschnitt 19 und den Austauschabschnitt im Hohlraum 12 zum Abluftauslass 17. Durch den im zu lüftenden Raum erzeugten Unterdruck wird am Zulufteinlass 8 Zuluft angesaugt und durch den Zuluftkanal und den Zuluftauslass 11 in den Raum geleitet. Wegen Undichtigkeiten des Raumes ist der Zuluftstrom gewöhnlich geringer als der Abluftstrom.

Ein Teil des Abluftstroms bleibt bis zum Durchgang 15, wo er um 180° umgelenkt wird und in den Hohlraum 12 übergeht, im Zuleitungsabschnitt 19, wo er vom Austauschabschnitt des Zuluftkanals thermisch isoliert ist. Andere Teile davon werden jedoch stromaufwärts des Durchgangs 15 durch die Schlitze 20a,b,c aus dem Zuleitungsabschnitt 19 abgezweigt und treten weiter stromabwärts in den Abluftstrom im Hohlraum 12, d.h. den Austauschabschnitt des Abluftkanals ein. Durch die Schlitze 20a,b,c werden daher Teile des Hohlraums 12 überbrückt, wobei die Eintrittsstelle der Kurzschlussverbindung umso weiter stromabwärts im Hohlraum 12 liegt, je weiter stromaufwärts ihre Abzweigstelle im Zuleitungsabschnitt 19 liegt. Der überbrückte Teil ist im Fall des Schlitzes 20c verhältnismässig kurz, beim Schlitz 20a beträgt er jedoch deutlich mehr als die Hälfte der Länge des Hohlraums 12.

Die Schlitze 20a,b,c sind so dimensioniert, dass sie jeweils etwa 10-15% des gesamten Abluftstroms abzweigen, insgesamt beträgt der Anteil des Abluftstroms, der auf diese Weise einen kleineren oder grösseren Teil des Austauschabschnitts des Abluftkanals umgeht, ca. 25-50%. Es hat sich gezeigt, dass dieses Kurzschliessen von Teilen des Austauschabschnittes durch Teile des Abluftstromes den Wirkungsgrad der Lüftungseinrichtung in überraschender Weise verbessert.

Es sind verschiedene Abwandlungen der beschriebenen Lüftungseinrichtung möglich. U.a. können die Rollen des Abluftkanals und des Zuluftkanals im wesentlichen vertauscht sein. Es ist auch möglich, im Zuluftkanal ebenfalls einen Ventilator vorzusehen. Ventilatoren sollten zwecks möglichst weitgehender Vermeidung von Lärm im zu lüftenden Raum womöglich immer am dem Aussenraum zugewandten Ende des Abluft- und gegebenenfalls des Zuluftkanals angeordnet sein.

### Bezugszeichenliste

- 1: Boden
- 2: Deckel
- 3a,b: Seitenwände
- 4a,b: Stirnwände
- 5: erste Zwischenwand
- 6: zweite Zwischenwand
- 7: Einlasskammer
- 8: Zulufteinlass
- 9: Umlenkwände
- 10: Auslasskammer
- 11: Zuluftauslass
- 12: Hohlraum
- 13: Rohre
- 14: Trennwand
- 15: Durchgang
- 16: Ablufteinlass
- 17: Abluftauslass
- 18: Ventilator
- 19: Zuleitungsabschnitt
- 20a,b,c: Durchlässe

## Patentansprüche

1. Lüftungseinrichtung mit einem ersten Kanal, welcher einen ersten Einlass (16) mit einem ersten Auslass (17) verbindet und einem zweiten Kanal, welcher einen zweiten Einlass (8) mit einem zweiten Auslass (11) verbindet, wobei ein erster Austauschabschnitt, welcher einen Abschnitt des ersten Kanals bildet, und ein zweiter Austauschabschnitt, welcher einen Abschnitt des zweiten Kanals bildet, einen Wärmetauscher bilden, indem sie gegengleich in wärmeleitender Verbindung geführt sind, **dadurch gekennzeichnet, dass** der erste Einlass (16) mit mindestens einer stromabwärts des Anfangs des ersten Austauschabschnitts liegenden Eintrittsstelle über eine Kurzschlussverbindung verbunden ist, welche den zwischen dem Anfang und der Eintrittsstelle liegenden Teil des ersten Austauschabschnitts überbrückt.

2. Lüftungseinrichtung nach Anspruch 1, **dadurch gekennzeichnet, dass** der erste Kanal einen den ersten Einlass mit dem Anfang des ersten Austauschabschnitts verbindenden Zuleitungsabschnitt (19) aufweist, von welchem die mindestens eine Kurzschlussverbindung an einer stromabwärts des ersten Einlasses liegenden Abzweigstelle abzweigt.

3. Lüftungseinrichtung nach Anspruch 2, **dadurch gekennzeichnet, dass** sie mehrere Kurzschlussverbindungen aufweist, deren Eintrittsstellen stromabwärts versetzt im ersten Austauschabschnitt aufeinanderfolgen, während ihre Abzweigstellen stromaufwärts versetzt im Zuleitungsabschnitt (19) aufeinanderfolgen.

4. Lüftungseinrichtung nach Anspruch 2 oder 3, **dadurch gekennzeichnet, dass** mindestens ein Teil des Zuleitungsabschnitts (19) gegengleich neben dem ersten Austauschabschnitt angeordnet ist.

5. Lüftungseinrichtung nach Anspruch 4, **dadurch gekennzeichnet, dass** die Kurzschlussverbindung jeweils als Durchlass durch eine den Zuleitungsabschnitt (19) vom ersten Austauschabschnitt trennende Trennwand (14) ausgebildet ist.

6. Lüftungseinrichtung nach Anspruch 5, **dadurch gekennzeichnet, dass** der Durchlass jeweils als Schlitz (20a, 20b, 20c) ausgebildet ist.

7. Lüftungseinrichtung nach Anspruch 5 oder 6, **dadurch gekennzeichnet, dass** sich der Zuleitungsabschnitt (19) unmittelbar am Durchlass erweitert.

8. Lüftungseinrichtung nach einem der Ansprüche 2 bis 7, **dadurch gekennzeichnet, dass** der Zuleitungsabschnitt (19) mehrere Verengungen aufweist.

9. Lüftungseinrichtung nach einem der Ansprüche 2 bis 8, **dadurch gekennzeichnet, dass** mindestens ein allfälliger stromaufwärts der ersten Abzweigstelle liegender Teil des Zuleitungsabschnittes (19) vom Wärmetauscher thermisch isoliert ist.

10. Lüftungseinrichtung nach einem der Ansprüche 1 bis 9, **dadurch gekennzeichnet, dass** der Wärmetauscher als länglicher Hohlraum (12) mit einer Mehrzahl in Längsrichtung denselben durchdringender Rohre (13) ausgebildet ist, deren Innenraum den zweiten Austauschabschnitt zubilden, während der verbleibende Teil des Hohlraums (12) den ersten Austauschabschnitt bildet.

11. Lüftungseinrichtung nach Abschnitt 10, **dadurch gekennzeichnet, dass** die Rohre (13) parallel verlaufen.

12. Lüftungseinrichtung nach Anspruche 10 oder 11, **dadurch gekennzeichnet, dass** die Rohre (13) mit dem zweiten Einlass über eine durch eine erste Zwischenwand (5), durch welche die Rohre (13) geführt sind, getrennte Einlasskammer (7) verbunden sind.

13. Lüftungseinrichtung nach Anspruch 12, **dadurch gekennzeichnet, dass** die Einlasskammer (7) turbulenzerzeugende Einbauten aufweist.

14. Lüftungseinrichtung nach Anspruch 12 oder 13, **dadurch gekennzeichnet, dass** die Einlasskammer (7) vom Hohlraum (12) thermisch isoliert ist.

15. Lüftungseinrichtung nach einem der Ansprüche 10 bis 14, **dadurch gekennzeichnet, dass** die Rohre (13) mit dem zweiten Auslass über eine vom Hohlraum (12) durch eine zweite Zwischenwand (6), durch welche die Rohre (13) geführt sind, getrennte Auslasskammer (10) verbunden sind.

16. Lüftungseinrichtung nach einem der Ansprüche 12 bis 15, **dadurch gekennzeichnet, dass** der erste Einlass und der erste Auslass unmittelbar an der ersten Zwischenwand (5) angeordnet sind.

17. Lüftungseinrichtung nach einem der Ansprüche 1 bis 16, **dadurch gekennzeichnet, dass** im Bereich des ersten Auslasses ein Ventilator (18) angeordnet ist.

18. Verfahren zum Betrieb der Lüftungseinrichtung nach einem der Ansprüche 1 bis 17 zur Lüftung eines geheizten oder gekühlten Raumes, **dadurch gekennzeichnet, dass** der erste Kanal als Abluftkanal eingesetzt wird mit dem ersten Einlass als im Raum angeordnetem Ablufteinlass (16) und dem ersten Auslass als ausserhalb des Raumes angeordnetem Abluftauslass (17) und der zweite Kanal als Zuluftkanal mit dem zweiten Einlass als ausserhalb des Raumes angeordnetem Zulufteinlass (8) und dem zweiten Auslass als im Raum angeordnetem Zuluftauslass (11).

## Claims

1. Ventilation device comprising a first channel which connects a first inlet (16) to a first outlet (17) and a second channel which connects a second inlet (8) to a second outlet (11), a first exchange section which forms a section of the first channel and a second exchange section which forms a section of the second channel forming a heat exchanger in that they are led counter to each other in heat-conducting connection, **characterized in that** the first inlet (16) is connected to at least one entry point located downstream of the beginning of the first exchange section, via a short-circuit connection which bridges that part of the first exchange section which is located between the beginning and the entry point.

2. Ventilation device according to Claim 1, **characterized in that** the first channel has a supply line section (19) which connects the first inlet to the beginning of the first exchange section and of which the at least one short-circuit connection branches off at a branching point located downstream of the first inlet.

3. Ventilation device according to Claim 2, **characterized in that** it has a plurality of short-circuit connections, the entry points of which are staggered in sequence downstream in the first exchange section while their branching points are staggered in sequence upstream in the supply line section (19).

4. Ventilation device according to Claim 2 or 3, **characterized in that** at least a part of the supply line section (19) is arranged adjacent to the first exchange section and running counter to the same.

5. Ventilation device according to Claim 4, **characterized in that** the short-circuit connection is formed in each case as an opening through a partition (14) separating the supply line section (19) from the first exchange section.

6. Ventilation device according to Claim 5, **characterized in that** the opening is in each case in the form of a slot (20a, 20b, 20c).

7. Ventilation device according to Claim 4 or 5, **characterized in that** the supply line section (19) widens directly at the opening.

8. Ventilation device according to any of Claims 2 to 7, **characterized in that** the supply line section (19) has a plurality of constrictions.

9. Ventilation device according to any of Claims 2 to 8, **characterized in that** at least a possible part of the supply line section (19) upstream of the first branching point is thermally insulated from the heat exchanger.

10. Ventilation device according to any of Claims 1 to 9, **characterized in that** the heat exchanger is in the form of an elongated cavity (12) having a plurality of pipes (13) which pass through said cavity in the longitudinal direction and whose interior forms the second exchange section, while the remaining part of the cavity (12) forms the first exchange section.

11. Ventilation device according to Claim 10, **characterized in that** the pipes (13) are parallel.

12. Ventilation device according to Claim 10 or 11, **characterized in that** the pipes (13) are connected to the second inlet via an inlet chamber (7) separated by a first intermediate wall (5) through which the pipes (13) are led.

13. Ventilation device according to Claim 12, **characterized in that** the inlet chamber (7) has turbulence-generating baffles.

14. Ventilation device according to Claim 12 or 13, **characterized in that** the inlet chamber (7) is thermally insulated from the cavity (12).

15. Ventilation device according to any of Claims 10 to 14, **characterized in that** the pipes (13) are connected to the second outlet via an outlet chamber (10) separated from the cavity (12) by a second intermediate wall (6) through which the pipes (13) are led.

16. Ventilation device according to any of Claims 12 to 15, **characterized in that** the first inlet and the first outlet are arranged directly at the first intermediate wall (5).

17. Ventilation device according to any of Claims 1 to 16, **characterized in that** a fan (18) is arranged in the region of the first outlet.

18. Method for operating the ventilation device according to any of Claims 1 to 17 for ventilating a heated or cooled room, **characterized in that** the first channel is used as a waste air channel, with the first inlet as waste air inlet (16) arranged in the room and the first outlet as waste air outlet (17) arranged outside the room, and the second channel as air supply channel, with the second inlet as air supply inlet (8) arranged outside the room and the second outlet as air supply outlet (11) arranged in the room.

## Revendications

1. Dispositif de ventilation comprenant un premier canal qui relie une première entrée (16) à une première sortie (17) et un second canal qui relie une seconde entrée (8) à une seconde sortie (11), une première section d'échange qui forme une section du premier canal et une seconde section d'échange qui forme une section du second canal formant un échangeur de chaleur en ce qu'elles sont dirigées de manière diamétralement opposée en connexion conductrice de la chaleur, **caractérisé en ce que** la première entrée (16) est reliée à au moins un point d'entrée situé en aval du début de la première section d'échange, via une connexion de court-circuit qui court-circuite la partie de la première section d'échange qui est située entre le début et le point d'entrée.

2. Dispositif de ventilation selon la revendication 1, **caractérisé en ce que** le premier canal a une section de conduite d'alimentation (19) qui relie la première entrée au début de la première section d'échange et dont la au moins une connexion de court-circuit bifurque au niveau d'un point de bifurcation situé en aval de la première entrée.

3. Dispositif de ventilation selon la revendication 2, **caractérisé en ce qu'**il comporte une pluralité de connexions de court-circuit dont les points d'entrée sont espacés en séquence en aval dans la première section d'échange tandis que leurs points de bifurcation sont espacés en séquence en amont dans la section de conduite d'alimentation (19).

4. Dispositif de ventilation selon la revendication 2 ou 3, **caractérisé en ce qu'au** moins une partie de la section de conduite d'alimentation (19) est disposée en sens inverse, adjacente à la première section d'échange.

5. Dispositif de ventilation selon la revendication 4, **caractérisé en ce que** la connexion de court-circuit est formée dans chaque cas comme une ouverture à travers une cloison (14) séparant la section de conduite d'alimentation (19) de la première section d'échange.

6. Dispositif de ventilation selon la revendication 5, **caractérisé en ce que** l'ouverture est dans chaque cas sous la forme d'une fente (20a, 20b, 20c).

7. Dispositif de ventilation selon la revendication 5 ou 6, **caractérisé en ce que** la section de conduite d'alimentation (19) s'élargit directement au niveau de l'ouverture.

8. Dispositif de ventilation selon l'une des revendications 2 à 7, **caractérisé en ce que** la section de conduite d'alimentation (19) comporte une pluralité d'étranglements.

9. Dispositif de ventilation selon l'une des revendications 2 à 8, **caractérisé en ce qu'**au moins une éventuelle partie de la section de conduite d'alimentation (19) en amont du premier point de bifurcation est isolée thermiquement de l'échangeur de chaleur.

10. Dispositif de ventilation selon l'une des revendications 1 à 9, **caractérisé en ce que** l'échangeur de chaleur est sous la forme d'une cavité allongée (12) ayant une pluralité de tuyaux (13) qui traversent ladite cavité dans le sens longitudinal et dont l'intérieur forme la seconde section d'échange, tandis que la partie restante de la cavité (12) forme la première section d'échange.

11. Dispositif de ventilation selon la revendication 10, **caractérisé en ce que** les tuyaux (13) sont parallèles.

12. Dispositif de ventilation selon la revendication 10 ou 11, **caractérisé en ce que** les tuyaux (13) sont reliés à la seconde entrée via une chambre d'entrée (7) séparée par une première paroi intermédiaire (5) à travers laquelle passent les tuyaux (13).

13. Dispositif de ventilation selon la revendication 12, **caractérisé en ce que** la chambre d'entrée (7) comporte des chicanes génératrices de turbulence.

14. Dispositif de ventilation selon la revendication 12 ou 13, **caractérisé en ce que** la chambre d'entrée (7) est isolée thermiquement de la cavité (12).

15. Dispositif de ventilation selon l'une des revendications 10 à 14, **caractérisé en ce que** les tuyaux (13) sont reliés à la seconde sortie via une chambre de sortie (10) séparée de la cavité (12) par une seconde paroi intermédiaire (6) à travers laquelle passent les tuyaux (13).

16. Dispositif de ventilation selon l'une des revendications 12 à 15, **caractérisé en ce que** la première entrée et la première sortie sont disposées directement au niveau de la première paroi intermédiaire (5).

17. Dispositif de ventilation selon l'une des revendications 1 à 16, **caractérisé en ce qu'**un ventilateur (18) est disposé dans la région de la première sortie.

18. Procédé de fonctionnement du dispositif de ventilation selon l'une quelconque des revendications 1 à 17 pour la ventilation d'une pièce chauffée ou refroidie, **caractérisé en ce que** le premier canal est utilisé comme un canal d'air vicié, avec la première entrée comme entrée d'air vicié (16) disposée dans la pièce et la première sortie comme sortie d'air vicié (17) disposée à l'extérieur de la pièce, et le second canal comme canal d'alimentation d'air, avec la seconde entrée comme entrée d'alimentation d'air (8) disposée à l'extérieur de la pièce et la seconde sortie comme sortie d'alimentation d'air (11) disposée dans la pièce.
